# EUROPEAN PATENT APPLICATION

(11) **EP 4 016 175 A1**
(43) Date of publication of application: **22.06.2022**
(21) Application number: 20873376.6
(22) Date of filing: 04.12.2020
(51) Int. Cl.: G02F 1/1333

(54) **DISPLAY PANEL AND DISPLAY APPARATUS**

(30) Priority: 22.10.2020 CN 202011137648
(71) Applicant: TCL COMMUNICATION (NINGBO) CO., LTD., Ningbo, Zhejiang 315040 (CN)
(72) Inventor: CHEN, Ping, Zhejiang 315040 (CN); LIN, Ke, Zhejiang 315040 (CN); QIU, Zhuwei, Zhejiang 315040 (CN)
(74) Representative: Murgitroyd & Company
(86) International application number: PCT/CN2020/133948
(87) International publication number: WO 2022/082941

(57) **Abstract**

The present invention discloses a display panel and display apparatus, which includes a display device, a sensor layer located on the display device and a cover plate disposed on the sensor layer. The display device includes a reflective layer. A plurality of dots are disposed on a surface of the sensor layer or the cover plate.

## Description

This application claims the benefit of priority of a China Patent Application No. 202011137648.5 submitted to State Intellectual Property Office of the P.R.C. on October 22, 2020, entitled "DISPLAY PANEL AND DISPLAY APPARATUS", the contents of which are incorporated herein by reference in their entirety.

### TECHNICAL FIELD

The present invention relates to touch display technologies, and more particularly to a display panel and display apparatus.

### DESCRIPTION OF RELATED ARTS

Mobile phones and tablet computers are commonly-used electronic apparatuses in people's life, and the electronic apparatuses are usually equipped with displays such as liquid crystal displays (LCDs), active-matrix organic light-emitting diode (AMOLED) displays, etc. However, activation of the LCDs and AMOLED displays needs backlight or self-luminous light sources to be lighted up, and blue light carried by the light sources is harmful to human eyes.

In this regard, display manufacturers have introduced a display that requires no backlight or self-luminous light source, such as reflective liquid crystal displays (RLCDs) and electronic ink (e-ink) displays. However, the brightness of this type of touch displays needs to be improved.

### TECHNICAL PROBLEMS

The present invention provides a display panel and a display apparatus, the objective of which is to increase the brightness of reflective light, thereby improving display performance.

### TECHNICAL SOLUTIONS

In an aspect, the present invention provides a display panel, including:
a display device, including a first substrate, a reflective layer located on an upper surface of the first substrate and a second substrate located above the reflective layer;
a sensor layer located on the display device; and
a cover plate located on the sensor layer,
wherein a plurality of dots are disposed on a surface of the sensor layer or the cover plate.

Preferably, the dots are convex or concave.

Preferably, the dots are in a shape of at least one of a semicircle, a circle, a bar and an ellipse.

Preferably, the cover plate has a first surface and a second surface that are parallel to the first substrate, and the dots are disposed on the first surface or the second surface.

Preferably, the sensor layer has a third surface and a fourth surface that are parallel to the first substrate, and the dots are disposed on the third surface or the fourth surface.

Preferably, the display panel further includes an optically clear adhesive disposed between the display device and the sensor layer.

Preferably, the display panel further includes an inner light source located on a side edge of the cover plate.

Preferably, the display panel further includes a light guide plate disposed on an upper surface of the display device.

Preferably, a material of the cover plate includes any one of SiO₂, polycarbonate (PC) and polymethyl methacrylate (PMMA), and a material of the sensor layer includes any one of SiO₂, PC and PMMA.

Preferably, the display device further includes liquid crystals or electronic ink (e-ink) located between the first substrate and the second substrate.

In another aspect, the present invention provides a display apparatus including the display panel according to the afore-mentioned aspect.

Preferably, the dots are convex or concave.

Preferably, the dots are in a shape of at least one of a semicircle, a circle, a bar and an ellipse.

Preferably, the cover plate has a first surface and a second surface that are parallel to the first substrate, and the dots are disposed on the first surface or the second surface.

Preferably, the sensor layer has a third surface and a fourth surface that are parallel to the first substrate, and the dots are disposed on the third surface or the fourth surface.

Preferably, the display panel further includes an optically clear adhesive disposed between the display device and the sensor layer.

Preferably, the display panel further includes an inner light source located on a side edge of the cover plate.

Preferably, the display panel further includes a light guide plate disposed on an upper surface of the display device.

Preferably, a material of the cover plate includes any one of SiO₂, polycarbonate (PC) and polymethyl methacrylate (PMMA), and a material of the sensor layer includes any one of SiO₂, PC and PMMA.

Preferably, the display device further includes liquid crystals or electronic ink (e-ink) located between the first substrate and the second substrate.

### BENEFICIAL EFFECTS

The present invention provides a display panel and display apparatus, which includes a display device, a sensor layer and a cover plate disposed on the sensor layer. The display device includes a reflective layer. A plurality of dots are disposed on a surface of the sensor layer or the cover plate. The dot structure can change the direction of light to achieve an effect of gathering light. In this way, the light propagated down to the display device increases such that the reflective layer in the display device is able to reflect more light, thereby increasing the brightness of reflective light.

### BRIEF DESCRIPTION OF THE DRAWINGS

The technical solutions and other beneficial effects of the present invention will be more apparent with reference to the detailed descriptions of the embodiments of the present invention below in accompanying with the drawings.
FIG. 1 is a structural schematic diagram illustrating a display panel according to an embodiment of the present invention.
FIG. 2 is a structural schematic diagram illustrating a display panel according to a first modified embodiment of the present invention.
FIG. 3 is a structural schematic diagram illustrating a display panel according to a second modified embodiment of the present invention.
FIG. 4 is a structural schematic diagram illustrating a display panel according to a third modified embodiment of the present invention.
FIG. 5 is a structural schematic diagram illustrating a display panel according to a fourth modified embodiment of the present invention.
FIG. 6 is a structural schematic diagram illustrating a mobile terminal according to an embodiment of the present invention.

### DETAILED DESCRIPTION

The technical solutions in the embodiments of the present invention will be clearly and completely described below with reference to accompanying drawings of the embodiments of the present invention. Obviously, the described embodiments are merely a part of embodiments of the present invention and are not all of the embodiments. Based on the embodiments of the present invention, other embodiments obtained by those of ordinary skill in the art without making any inventive effort are within the scope the present invention seeks to be protected.

In the description of the present invention, it needs to be understood that the terms "first" and "second" are used for descriptive purposes only, and should not be taken to indicate or imply relative importance, or implicitly indicate the indicated number of technical features. Thus, by defining a feature with "first" or "second", it may explicitly or implicitly include one or more features. In the description of the present invention, "a plurality" means two or more unless explicitly defined.

In the present invention, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of' a second feature may include an embodiment in which the first feature is right or obliquely "on," "above," or "on top of' the second feature, or just means that the first feature is at a height higher than that of the second feature; while a first feature "below," "under," or "on bottom of' a second feature may include an embodiment in which the first feature is right or obliquely "below," "under," or "on bottom of' the second feature, or just means that the first feature is at a height lower than that of the second feature.

A display panel is provided in an embodiment of the present invention.

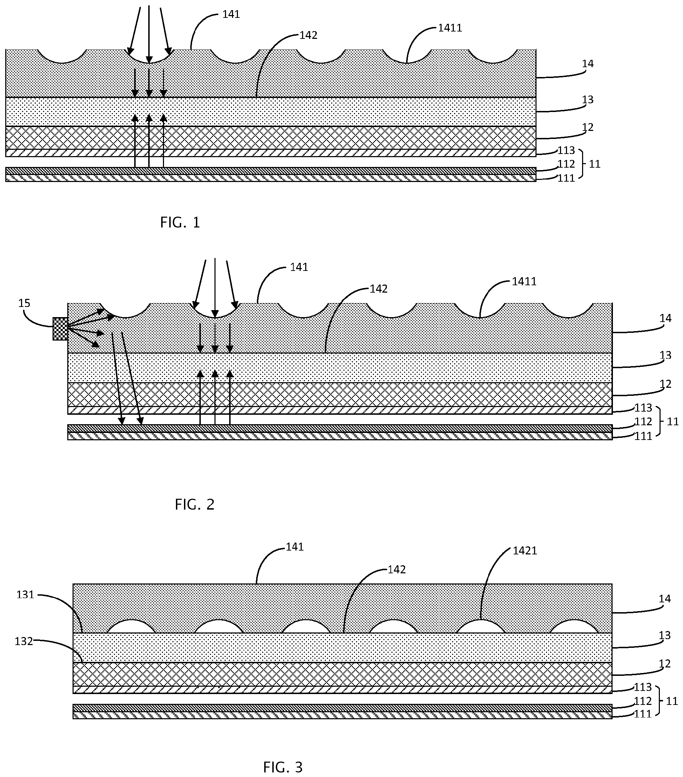

FIG. 1 is a structural schematic diagram illustrating a display panel according to an embodiment of the present application. The display panel includes a display device 11, a sensor layer 13 located on the display device 11 and a cover plate 14 located on the sensor layer 13. The display device 11 includes a first substrate 111, a reflective layer 112 located on an upper surface of the first substrate 111 and a second substrate 113 located above the reflective layer 112. A plurality of dots are disposed on a surface of the sensor layer 13 or the cover plate 14. The dots may be of a convex or concave structure such as a semicircular protrusion or indent, a circular protrusion or indent, a striped protrusion or indent, and an elliptic protrusion or indent. The present embodiment is not limited to the shape.

In the present embodiment, liquid crystal molecules or electronic ink (not shown) may be filled between the first substrate 111 and the second substrate 113. The display panel is an RLCD if the liquid crystal molecules are disposed between the first substrate 111 and the second substrate 113; the display panel is an e-ink screen if the electronic ink is disposed between the first substrate 111 and the second substrate 113.

In the present embodiment, the display device 11 may be adhered to the sensor layer 13 by an optically clear adhesive (OCA) 12.

As shown in FIG. 1, the cover plate 14 has a first surface 141 and a second surface 142 that are parallel to the first substrate 111, and a plurality of dots 1411 are disposed on the first surface 141. The dots 1411 are concave semicircles. In other embodiment, the dots may be convex semicircles, concave circles, etc. Because both convex dots and concave dots can make external light be refracted, the light propagated down to the reflective layer 112 of the display device 11 increases, and as such, more light is reflected via the reflective layer 112 to arrive at human eyes, thereby improving the screen brightness.

FIG. 2 is a structural schematic diagram illustrating a display panel according to a first modified embodiment of the present invention. The display panel itself may be equipped with a light source, that an inner light source 15 such as a light emitting diode (LED) light source is provided on a side edge of the cover plate 14. When the dots 1411 are concave, the light from the inner light source 15 will be diffusely reflected or scattered on the dots 1411. This can increase an amount of light propagated to the reflective layer 112 and improve the brightness. This can also provide a light source in a dark environment (without external light).

FIG. 3 is a structural schematic diagram illustrating a display panel according to a second modified embodiment of the present invention. The dots 1421 are disposed on the second surface 142 of the cover plate 14. The dots 1421 are concave. In other embodiments, the dots 1421 may also be of a convex structure. Both a convex structure and a concave structure can make external light be refracted to the display device 11.

In the present embodiment, the sensor layer 13 has a third surface 131 and a fourth surface 132 that are parallel to the first substrate 11, and the dots 1421 may serve as concave dots located on the second surface 142 and may serve as convex dots located on the third surface 131. Concave dots on the second surface 142 can be manufactured by punching or etching. The punching is to form a desired profile by impacting the second surface 142 with a mold to change or correct the light path. The convex dots on the third surface 131 can be manufactured by coating. The coating is to coat a desired material on the third surface 131 by printing to change or correct the light path, in which the desired material is a material able to refract the light and change the light path such that the light moves toward the reflective layer 112.

The afore-mentioned inner light source may be provided to the embodiment of FIG. 3 to further improve the brightness of the display panel.

In other embodiments, it can also provide concave dots on the third surface 131 of the sensor layer 13. Likewise, this also uses refraction to achieve the effect of gathering light, and more light is propagated to the reflective layer 112.

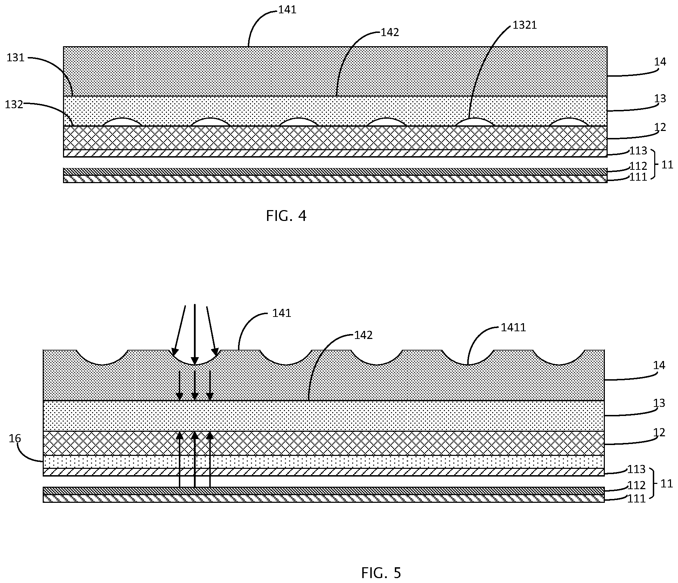

FIG. 4 is a structural schematic diagram illustrating a display panel according to a third modified embodiment of the present invention. The dots 1321 are disposed on the fourth surface 132 of the sensor layer 13. The dots 1321 are concave. Likewise, the dots 1321 can make the light above them from outside or the inner light source be gathered such that the light is refracted to the reflective layer 112.

In other embodiments, similarly, convex dots can be formed on the fourth surface of the sensor layer 13.

It can be understood that concave or convex dots are formed on the surface of the cover plate 14 or the sensor layer 13. The "concave" or "convex" profiles are named according to the position of the dots with respect to the surface. It is concave if the dots are recessed inward with respect to the surface; it is convex if the dots are protruded outward with respect to the surface. The convex dots can be formed by a coating or printing process, and the concave dots can be formed by a laser dotting or etching process.

In the present embodiment, all the second substrate 113, the optically clear adhesive 12, the sensor layer 13 and the cover plate 14 are made of transparent materials. The reflective layer 112 can be made of polyethylene terephthalate (PET) and polycarbonate (PC), and its reflectivity can reach 90%. The materials of the sensor layer 13 and the cover plate 14 include, but are not limited to, SiO₂, PC and polymethyl methacrylate (PMMA), and their materials may be identical to or different from each other. The optically clear adhesive 12 is a double-sided adhesive tape without a substrate material made of an optical acrylic adhesive without a substrate, upper and lower base layers of which each is attached to a layer of releasing film. It is the best adhesive for touch screens. The sensor layer 13 is provided with a touch screen sensor, which can sense a touch made by a finger on a screen, thereby carrying out a touch screen control function.

In the present embodiment, the dot structure can substitute a light guiding function supposed to be carried out by a light guide plate. FIG. 5 is a structural schematic diagram illustrating a display panel according to a fourth modified embodiment of the present invention. The display panel may further include a light guide plate 16, which is located on an upper surface of the display device 11 and can be used to guide the light gathered by the dots. The light guide plate 16 further increases the amount of light propagating to the reflective layer 112, thereby improving the brightness. The material of the light guide plate 16 is a transparent PC material having a light-guiding ability. Of course, the afore-mentioned inner light source can also be provided such that the display panel can be used in a dark environment.

The display panel provided in the embodiments of the present invention includes a display device 11, a sensor layer 13 located on the display device 11 and a cover plate 14 located on the sensor layer 13. A reflective layer 112 is coated inside the display device 11, and convex or concave dots are arranged on the surface of the cover plate 14 or the sensor layer 13 so as to gather the outside and/or an inner light source of the touch screen, thereby effectively improving the brightness of reflected light for the display panel. In this display panel, it can not only assist a light guide plate to increase the brightness of reflected light to improve display performance of the display panel, but also can substitute the light guide plate to provide reflected light for the display panel, thereby reducing a cost in light source design. The display panel is mainly suitable for reflective-LCD (RLCD) and e-ink touch displays.

An embodiment of the present invention further provides a display apparatus including the afore-mentioned display panel. It can be understood that the display apparatus has the same technical effects as the afore-mentioned display panel, which will not be repeated here.

Generally, the essence of a touch screen is a sensor, and it is formed by a touch sensor component and a touch screen controller. The touch sensor component is installed in front of a display screen, and is configured to sense a position touched by the user. The main function of the touch screen controller is to receive touch information from the touch sensor, and convert the information into coordinates to send to a central processing unit (CPU). The touch screen controller can also receive and execute a command from the CPU.

According to the types of sensors, touch screens are roughly classified into four types: infrared, resistive, surface acoustic wave, and capacitive touch screens. Infrared touch screen is cheap, but its frame is fragile, easy to produce light interference, and easy to cause distortion in curved-surface applications. Capacitive touch screen design is reasonable, but its image distortion problem is difficult to be fundamentally solved. Resistive touch screen is accurate in market position, but its price is quite high, and it is easy to be scratched and damaged. The surface acoustic wave touch screen solves various defects of the previous touch screens, is clear and not easy to be damaged, and is suitable for various occasions. Its disadvantage is that if there are water droplets and dust on the screen surface, the touch screen will become dull and doesn't even work.

For the infrared touch screen, a circuit board frame is mounted in the front of the display, and infrared transmitting tubes and infrared receiving tubes are arranged surrounding the four sides of the screen through the circuit board, so that an infrared ray matrix can be formed in which the infrared transmitting tubes and the corresponding infrared receiving tubes cross with each other. When the user touches the screen, his/her finger(s) may block two infrared rays both in the horizontal direction and in the vertical direction which pass this position, therefore a position at which the contact point is in the screen can be judged. Any touch object can change the infrared ray on the contact to realize a touch screen operation. The infrared touch screen is free from current, voltage and static electricity interference, and is suitable for some harsh environmental conditions. Its main advantages include low price, easy installation, no cards or any other controllers, and it can be used in computers of various grades. In addition, because there is no capacitor charging and discharging process, the response speed is faster than the capacitive type, but the resolution is lower.

The resistive touch screen is beneficial because of a low threshold, relatively low cost, and has advantages of not being affected by dust, temperature, and humidity. The shortcomings are also obvious. The outer screen is easy to be scratched, and sharp objects cannot be used to touch the screen. Generally, multi-touch is not allowed, that is, only a single-point touch is supported. If two or more touch points are pressed at the same time, the precise coordinates cannot be recognized and found. To enlarge a picture on the resistive screen, you can only click a "+" symbol multiple times to make the picture gradually enlarged. This is the basic technical principle of the resistive screen.

The surface acoustic wave touch screen works by using surface acoustic waves, which are mechanical waves that propagate along the surface of a medium. Corners of the touch screen are equipped with ultrasonic transducers. A high-frequency sound wave can be sent across the surface of the screen. When a finger touches the screen, the sound wave on the touch point is blocked, thereby determining a coordinate. The surface acoustic wave touch screen is not affected by environmental factors such as temperature and humidity. It has high resolution, scratch resistance, long lifespan, high light transmittance, and can maintain clear and bright image quality. It is most suitable for use in public places. However, dust, water and dirt will seriously affect its performance and require frequent maintenance to keep the screen smooth and clean.

The capacitive touch screen works by sensing a current on a human body. A layer of special transparent metal conductive material is attached to a glass surface. When it is touched by a conductive object, the capacitance of a contact point is changed so that the touched position can be detected. However, there is no response when touched with gloved hands or the hands holding non-conductive objects. This is because a more insulating medium is added. The capacitive touch screen can sense slight and fast touches well, is scratch-resistant, is not afraid of dust, water and dirt, and is suitable for use in harsh environments. However, since the capacitance changes with temperature, humidity or environmental electric field, its stability is poor, the resolution is low, and it is easy to drift.

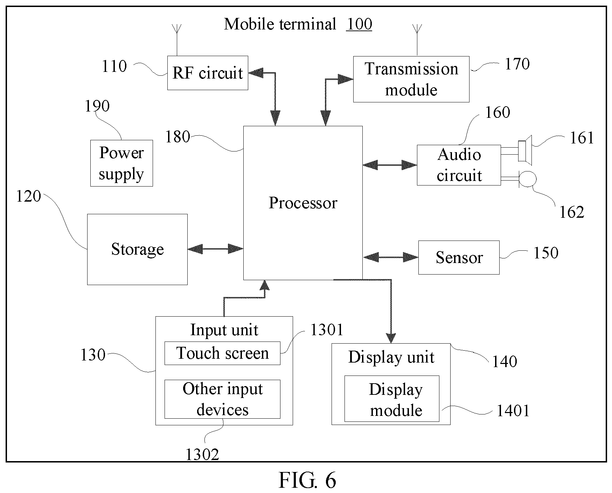

The display panel provided in the present embodiment can be applied to mobile terminals. The mobile terminals include mobile phones, computers, etc. FIG. 6 is a schematic structural diagram of a mobile terminal according to an embodiment of the present invention. The mobile terminal 100 may include an RF circuit 110, a storage 120, an input unit 130, a display unit 140, a sensor 150, an audio circuit 160, a transmission module 170, a processor 180, a power supply 190, and so on.

The RF circuit 110 is configured to receive and transmit electromagnetic waves to implement conversion between the electromagnetic waves and electrical signals, thereby communicating with a communication network or any other device. The RF circuit 110 may include various existing circuit components for executing the functions, for example, an antenna, an RF transceiver, a digital signal processor, an encryption/decryption chip, a subscriber identity module (SIM) card, a storage, and so on. The RF circuit 110 can communicate with various networks, such as internet, an intranet, or a wireless network, or can communicate with other devices via the wireless network. The above-mentioned wireless network may include a cellular network or a wireless local area network or metropolitan area network. The above-mentioned wireless network may use any one of communication standards, protocols, or technologies, including but not limited to Global System for Mobile communications (GSMC), Enhanced Data GSM Environment (EDGE), Wideband Code Division Multiple Access (WCDMA), Code Division Multiple Access (CDMA), Time Division Multiple Access (TDMA), WIFI (such as standards of the Institute of Electrical and Electronics Engineers including IEEE802.11a, IEEE802.11b, IEEE 802.11g, and/or IEEE 802.11n), Voice over Internet Protocol (VoIP), Worldwide Interoperability for Microwave Access (Wi-Max), any other protocol for mails, instant communication, and short messages, any other suitable communication protocol, or any other protocol which has not been developed.

The storage 120 can be used to store application programs and data. The application programs stored in the storage 120 include executable codes or instructions. By executing the application programs stored in the storage 120, the processor 180 may perform various functions and data processing. The storage 120 may include a code area and a data area, in which the code area is for storing an operating system, at least one application program needed for at least a function (such as an audio playback function and an image playback function), and the data area is for storing data (such as audio data and contacts) created according to a use of the electronic device. In addition, the storage 120 may include high-speed random access memory, and may further include non-volatile memory such as one or more magnetic disk storage devices, flash memory, or other non-volatile solid state storages. Correspondingly, the storage 120 may further include a storage controller for controlling access to the storage 120 from the processor 180 and the input unit 130.

The input unit 130 can be configured to receive input numbers or character information, and generate signal input of a keyboard, a mouse, a joystick, or an optical trackball in relation to user settings and functional control. Specifically, the input unit 130 may include a touch sensitive surface 1301 and any other input device 1302. The touch screen 1301, which is also called a touch display screen or a touchpad, can gather a touch operation (for example, operations by use of a finger of a user, a stylus, and any other suitable object or attachment on or near the screen 1301) applied on or near to the touch screen 1301 by the user and drive a connected device according to preset programs. Optionally, the touch screen 1301 may include a touch-sensitive device and a touch controller. The touch-sensitive device detects a direction of the user's touch, detects signals resulted from the touch operation, and transmits the signals to the touch controller. The touch controller receives information of the touch from the touch-sensitive device, converts it into a touch coordinate, further transmits the coordinate to the processor 180, and further receives and executes an instruction from the processor 180. Furthermore, the touch screen 1301 may be implemented by utilizing capacitive, resistive, infrared, and surface acoustic wave technologies. In addition to the touch screen 1301, the input unit 130 may further include any other input device 1302. Specifically, the other input device 1302 may include but not limited to one or any of the combination of a physical keyboard, function keys (such as volume control keys, switch keys, etc.), a trackball, a mouse, and a joystick.

The display unit 140 may be configured to display information inputted by the user, information provided for the user, or various types of graphical user interfaces of the mobile terminal 100. The graphical user interfaces may include a graph, a text, an icon, a video, and any combination of them. The display unit 140 may include a display panel 1401. Although the touch screen 1301 and the display panel 1401 are two separate components for implementing input and output functions, the touch screen 1301 and the display panel 1401 may be integrated into one component for implementing the input and output functions in some embodiments.

The mobile terminal 100 may further include at least one sensor 150, such as a light sensor, a motion sensor, and other sensors. Specifically, the light sensor can include an ambient light sensor and a proximity sensor. The ambient light sensor can adjust the brightness of the display panel 1401 according to bright or dark as to the ambient light. The proximity sensor can turn off the display panel 1401 and/or the backlight when the mobile terminal 100 is moved close to ears. As one type of the motion sensor, a gravity sensor (G-sensor) can detect acceleration speed on all directions (generally up to three axis), can detect magnitude and direction of the gravity when it stays still, and can identify a gesture in a cell phone application (such as a screen switch between landscape style and portrait style, relevant games, and magnetometer calibration) and recognize vibration patterns to identify relevant functions (such as pedometer, and knock), and so on. Additionally, a gyroscope, a barometer, a hygrometer, a thermometer, an infrared sensor, and any other sensor can be deployed in the mobile terminal 100, and the details for these are not repeated herein.

The audio circuit 160, a speaker 161, and a microphone 162 provide an audio interface between the user and the mobile terminal 100. The audio circuit 160 converts received audio data to an electrical signal and transmits the electrical signal to the speaker 161. The speaker 161 converts the electrical signal to sound signals and outputs the sound signals. In addition, the microphone 162 converts collected sound signal to an electrical signal. The audio circuit 160 converts the electrical signal to audio data and transmits the audio data to the processor 180 for further processing. After the processing, the audio data may be transmitted to another terminal via the RF circuit 110, or transmitted to the storage 120 for further processing. The audio circuit 160 may further include an earphone jack for providing communication between an external earphone and the mobile terminal 100.

The mobile terminal 100 can be configured to, by the transmission module 170 (such as a WIFI module), send and receive emails, browse a webpage, and access to streaming media, and so on. It provides the user with wireless broadband internet access.

The processor 180 functions as a control center of the mobile terminal 100 and is configured to connect each component of the cell phone using various interfaces and circuits, and is configured to execute the various functions of the mobile terminal 100 and to perform data processing by running or executing the software programs and/or modules stored in the storage 120 and calling the data stored in the storage 120, thereby monitoring the overall mobile terminal 100. Optionally, the processor 180 may include one or more processing cores. In some embodiments, an application processor and a modulation/demodulation processor can be integrated to form the processor 180. The application processor is primarily configured to process an operating system, user interfaces, application programs, and so on. The modulation/demodulation processor is primarily configured to process wireless communication. It should be understood that the modulation/demodulation processor can be independent from the processor 180.

The mobile terminal 100 further includes the power supply 190 configured to provide power for the various components of the mobile terminal 100. In some embodiments, the power supply can be logically coupled to the processor 180 via a power management system that controls charging, discharging, power consumption, and so on. The power supply 190 may further include one or more direct current (DC)/or alternating current (AC) power sources, recharging system, power failure detection circuit, power converter or inverter, power supply status indicator, and the like. Although not being shown, the mobile terminal 100 may include a camera (such as a front camera and a rear camera), a BLUETOOTH module, and so on. They are not repeated herein.

The descriptions of above embodiments are only used to help understand the technical solutions and core ideas of the present invention. Those having ordinary skill in the art should understand that they still can modify technical solutions recited in the aforesaid embodiments or equivalently replace partial technical features therein; these modifications or substitutions do not make essence of corresponding technical solutions depart from the scope of technical solutions of embodiments of the present invention.

## Claims

1. A display panel, comprising:
a display device, comprising a first substrate, a reflective layer located on an upper surface of the first substrate and a second substrate located above the reflective layer;
a sensor layer located on the display device; and
a cover plate located on the sensor layer,
wherein a plurality of dots are disposed on a surface of the sensor layer or the cover plate.

2. The display panel according to claim 1, wherein the dots are convex or concave.

3. The display panel according to claim 1, wherein the dots are in a shape of at least one of a semicircle, a circle, a bar and an ellipse.

4. The display panel according to claim 1, wherein the cover plate has a first surface and a second surface that are parallel to the first substrate, and the dots are disposed on the first surface or the second surface.

5. The display panel according to claim 1, wherein the sensor layer has a third surface and a fourth surface that are parallel to the first substrate, and the dots are disposed on the third surface or the fourth surface.

6. The display panel according to claim 1, further comprising an optically clear adhesive disposed between the display device and the sensor layer.

7. The display panel according to claim 1, further comprising an inner light source located on a side edge of the cover plate.

8. The display panel according to claim 1, further comprising a light guide plate disposed on an upper surface of the display device.

9. The display panel according to claim 1, wherein a material of the cover plate comprises any one of SiO₂, polycarbonate (PC) and polymethyl methacrylate (PMMA), and a material of the sensor layer comprises any one of SiO₂, PC and PMMA.

10. The display panel according to claim 1, wherein the display device further comprises liquid crystals or electronic ink (e-ink) located between the first substrate and the second substrate.

11. A display apparatus, comprising the display panel according to claim 1.

12. The display apparatus according to claim 11, wherein the dots are convex or concave.

13. The display apparatus according to claim 11, wherein the dots are in a shape of at least one of a semicircle, a circle, a bar and an ellipse.

14. The display apparatus according to claim 11, wherein the cover plate has a first surface and a second surface that are parallel to the first substrate, and the dots are disposed on the first surface or the second surface.

15. The display apparatus according to claim 11, wherein the sensor layer has a third surface and a fourth surface that are parallel to the first substrate, and the dots are disposed on the third surface or the fourth surface.

16. The display apparatus according to claim 11, further comprising an optically clear adhesive disposed between the display device and the sensor layer.

17. The display apparatus according to claim 11, further comprising an inner light source located on a side edge of the cover plate.

18. The display apparatus according to claim 11, further comprising a light guide plate disposed on an upper surface of the display device.

19. The display apparatus according to claim 11, wherein a material of the cover plate comprises any one of SiO₂, polycarbonate (PC) and polymethyl methacrylate (PMMA), and a material of the sensor layer comprises any one of SiO₂, PC and PMMA.

20. The display apparatus according to claim 11, wherein the display device further comprises liquid crystals or electronic ink (e-ink) located between the first substrate and the second substrate.
